# EUROPEAN PATENT APPLICATION

(11) **EP 4 769 742 A1**
(43) Date of publication of application: **01.07.2026**
(21) Application number: 25183241.6
(22) Date of filing: 17.06.2025
(51) Int. Cl.: H01M 50/293, H01M 50/213, H01M 50/204, H01M 50/249

(54) **BRACKET AND BATTERY PACK**

(30) Priority: 26.12.2024 CN 202423239795 U; 22.01.2025 WO PCT/CN2025/073877
(71) Applicant: Eve Energy Co., Ltd., Huizhou, Guangdong 516006 (CN)
(72) Inventor: LU, Jun, Huizhou, Guangdong, 516006 (CN); TIAN, Yuansong, Huizhou, Guangdong, 516006 (CN)
(74) Representative: Studio Torta S.p.A.

(57) **Abstract**

The application provides a bracket (100) and a battery pack. The bracket (100) includes a base part (110). The base part (110) is provided with at least one installation hole (120) and at least one communication hole (130). Each installation hole (120) is adapted for installing a corresponding battery cell (200). Each communication hole (130) is defined through an inner sidewall of a corresponding installation hole (120). The base part (110) is further provided with at least one glue injection hole (140). Each glue injection hole (140) communicates with a corresponding installation hole (120) through a corresponding communication hole (130).

## Description

### TECHNICAL FIELD

The present application relates to a field of batteries, specifically relates to a bracket and a battery pack.

### BACKGROUND

In related technologies, the installation steps for a battery cell group typically involve: first, fixing one end of the battery cell group to a bracket, and then fixing the other end of the battery cell group to another bracket.

### SUMMARY

In practical applications, the above structural design often has the following defects: (1) The bracket has insufficient fixing ability for the battery cell in vibration or impact environments, making the battery cell prone to displacement in such environments, which may lead to poor contact between the battery cell group and other assemblies; and (2) The installation steps include sequentially fixing two brackets to both ends of the battery cell group, and each bracket needs to be individually positioned, adjusted, and fixed, making the installation process cumbersome and resulting in low installation efficiency for the battery cell group.

The present application provides a bracket, configured to install at least one battery cell, comprising: a base part provided with at least one installation hole and at least one communication hole, wherein each installation hole being adapted for installing a corresponding battery cell, each communication hole is defined through an inner sidewall of the corresponding one of the at least one installation hole; wherein the base part is further provided with at least one glue injection hole, each glue injection hole communicates with the corresponding installation hole through a corresponding one of the at least one communication hole.

The present application also provides a battery pack, including at least one battery cell and the aforementioned bracket.

### Beneficial effect

The bracket provided by the embodiment of the present application includes a base part, the base part is provided with at least one installation hole and at least one communication hole, each installation hole is suitable for installing a corresponding battery cell, each communication hole is defined through the inner sidewall of the corresponding installation hole, the base part is further provided with at least one glue injection hole, each glue injection hole communicates with the corresponding installation hole through the corresponding communication hole. The bracket provided by the embodiment of the present application, on one hand, can avoid the operation of positioning and aligning the bracket during the installation process of the battery cell in related technologies, thereby reducing the complexity of manual operations during the battery cell installation process. On the other hand, injecting glue material into the gap between the battery cell and the installation hole through the glue injection hole can effectively enhance the connection stability between the battery cell and the installation hole, effectively reducing the impact of external impact forces and vibrations on the connection stability between the bracket and the battery cell, thereby reducing the risk of displacement of the battery cell or loosening of the connection with other assemblies.

The battery pack provided by the embodiment of the present application, by applying the aforementioned bracket, can reduce assembly difficulty and ensure structural stability.

### BRIEF DESCRIPTION OF THE DRAWINGS

FIG. 1 is a schematic structural view of the bracket provided by the embodiment of the present application;
FIG. 2 is a schematic structural view of the bracket and the battery cell provided by the embodiment of the present application;
FIG. 3 is a top view of the bracket in FIG. 1;
FIG. 4 is a cross-sectional view along line A-A in FIG. 3; and
FIG. 5 is a side view of the bracket in FIG. 1.

### Reference characters indication

100, bracket; 110, base part; 120, installation hole; 130, communication hole; 131, first communication hole; 132, second communication hole; 140, glue injection hole; 150, lightening hole; 160, mounting part; 200, battery cell.

### DETAILED DESCRIPTION

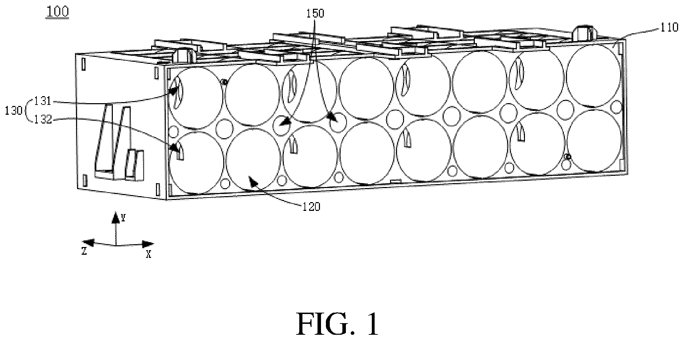

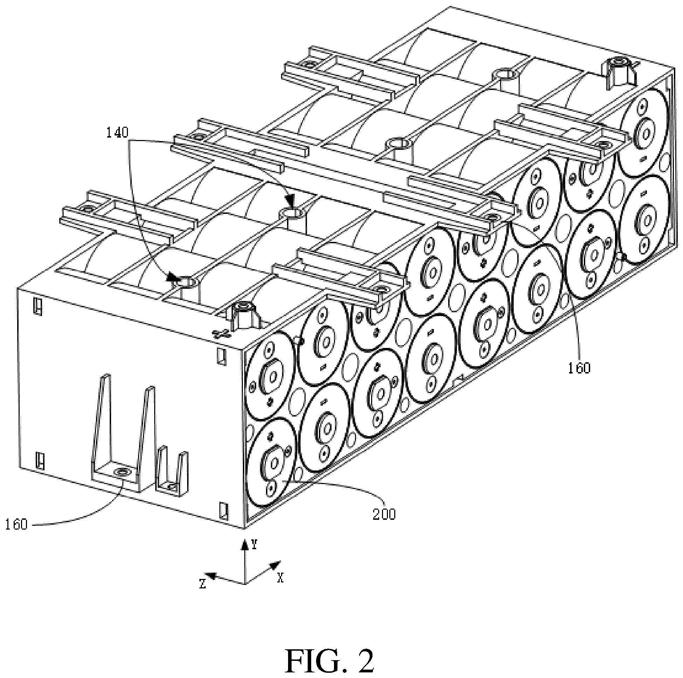

In a first aspect, with reference to FIG. 1, an embodiment of the present application provides a bracket 100. With reference to FIGs. 1 and 2, FIG. 1 is the schematic structural view of the bracket 100 provided by the embodiment of the present application, and FIG. 2 is the schematic structural view of the bracket 100 and the battery cell 200 provided by the embodiment of the present application. The bracket 100 includes a base part 110, which is provided with at least one installation hole 120, at least one communication hole 130, and at least one glue injection hole 140. Each installation hole 120 is used to install a corresponding battery cell 200, and each communication hole 130 is defined through the inner sidewall of a corresponding one of the at least one installation hole 120. Each glue injection hole 140 communicates with the corresponding installation hole 120 through a corresponding one of the at least one communication hole 130.

Exemplarily, steps for fixing the battery cell 200 using the bracket 100 provided by the present embodiment include:
(1) Installing each battery cell 200 into the corresponding installation hole 120 and ensuring the position of the battery cell 200 is aligned;
(2) After all battery cells 200 are installed into the installation holes 120 of the bracket 100, adjusting the position of the bracket 100 so that the side provided with the glue injection holes 140 faces upwards to facilitate the injection of glue; and
(3) Injecting an appropriate amount of glue into the glue injection holes 140 in the bracket 100 by using a glue injection device or manually. During the injection process, under influence of inertia and gravity, the glue would flow along the path and fill a gap between the battery cell 200 and the installation hole 120. The glue would gradually cover the battery cell 200 and the inner sidewall of the installation hole 120 and begin to bond them. Through a curing effect of the glue, the glue would adhere between the battery cell 200 and the inner sidewall of the installation hole 120, ultimately forming a firm bonding structure.

Compared to the fixing method in related technologies where both ends of the battery cell 200 are sequentially installed to two brackets 100, the present embodiment provides a bracket 100 by setting a plurality of installation holes 120 in the base part 110 of the bracket 100. The installation step for the battery cell 200 is merely to install the entire battery cell 200 into the corresponding installation hole 120 without the need for additional positioning and adjustment operations on the bracket 100. the structural design avoids the operation of positioning and aligning the bracket 100 during the installation process of the battery cell 200 in related technologies, thereby reducing the difficulty of manual operations during the battery cell installation process. The simplification of the installation process reduces human errors and potential damage risks during installation, thereby improving overall production efficiency.

In addition, the battery cell 200 is bonded within the installation hole 120 through glue material, which can effectively enhance the connection stability between the battery cell 200 and the installation hole 120. The application of glue material can also fill any tiny gaps that may exist between the battery cell 200 and the installation hole 120 during the flow process, thereby further improving the fixing effect of the battery cell 200. Moreover, compared to the method in related technologies where two brackets 100 are used to fix both ends of the battery cell 200, in the structural design, the relative area between the inner sidewall of the installation hole 120 and the side of the battery cell 200 is larger, allowing the battery cell 200 to be tightly fitted into the installation hole 120 through the glue material, thus ensuring the stability of the battery cell 200 within the installation hole 120. the structural design can effectively reduce the impact of external impact forces and vibrations, thereby reducing the risk of displacement of the battery cell 200 or loosening of the connection with other assemblies.

In some embodiments, with reference to FIG. 1 and FIG. 2, the base part 110 is provided with a plurality of installation holes 120 arranged in a first direction. Each communication hole 130 is defined through the inner sidewalls of adjacent two of the installation holes 120 in the first direction, so that each glue injection hole 140 communicates with adjacent two of the installation holes 120 in the first direction through the corresponding communication hole 130. The first direction can be referred to as the X direction in FIG. 1 and FIG. 2.

To ensure that sufficient glue material can be injected into each installation hole 120, it is usually necessary to design a separate glue injection hole 140 for each installation hole 120. Although the method ensures the glue injection effect for each installation hole 120, when the bracket 100 is provided with a large number of installation holes 120, the number of glue injection holes 140 would also increase accordingly, which may lead to an increase in the number of holes in the bracket 100 structure, thereby weakening the overall strength of the bracket 100 and ultimately affecting the stability and durability. Moreover, setting a plurality of glue injection holes 140 may also increase production costs and the complexity of the glue injection process.

To solve the above issue, in the present embodiment, by designing the communication hole 130 defined through the inner sidewall between adjacent two of the installation holes 120, enables one glue injection hole 140 to inject glue material into adjacent two of the installation holes 120 simultaneously through the flow channel. the "one hole for multiple uses" structural design not only reduces the number of glue injection holes 140, avoiding the decrease in structural strength of the bracket 100 caused by excessive glue injection holes 140, but also simplifies the production process and glue injection operation of the bracket 100.

In some embodiments, with reference to FIGs. 1 and 2, the base part 110 is provided with a plurality of installation holes 120 arranged in a second direction. Each glue injection hole 140 communicates with adjacent two of the installation holes 120 in the second direction through two corresponding communication holes 130. The second direction can be referred to as the Y direction in FIG. 1 and FIG. 2.

In the present embodiment, each glue injection hole 140 communicates with adjacent two of the installation holes 120 in the second direction through two corresponding communication holes 130, allowing glue material to flow through the glue injection hole 140 and fill into the adjacent two of the installation holes 120 in the second direction. In traditional designs, it is usually necessary to set a separate glue injection hole 140 for each installation hole 120, which, while ensuring sufficient glue material for each installation hole 120, increases the complexity of the overall structure of the bracket 100 and may negatively affect the strength and stability. The present embodiment connects each glue injection hole 140 to adjacent two of the installation holes 120 through two communication holes 130, thereby effectively reducing the number of the glue injection holes 140 in the bracket structure while achieving glue injection into the installation holes 120, avoiding the problem of decreased overall strength of the base part 110 due to excessive the glue injection holes 140.

In some embodiments, with reference to FIG. 2, each glue injection hole 140 communicates with adjacent two of the installation holes 120 in the second direction through two corresponding communication holes 130, wherein the two communication holes 130 include a first communication hole 131 and a second communication hole 132. The second communication hole 132 is located on the side of the first communication hole 131 away from the glue injection hole 140, and the size of the second communication hole 132 in the circumferential direction of the corresponding installation hole 120 is less than the size of the first communication hole 131 in the circumferential direction of the corresponding installation hole 120.

Each communication hole 130 is defined through the inner sidewall of the corresponding installation hole 120, meaning that the size of the communication hole 130 directly affects the structural strength of the inner sidewall of the installation hole 120. To ensure that the setting of the second communication hole 132 does not excessively weaken the strength of the inner sidewall of the installation hole 120 during design and manufacturing, the present embodiment sets the size of the second communication hole 132 in the circumferential direction of the corresponding installation hole 120 to be less than the size of the first communication hole 131 in the circumferential direction, ensuring that the inner sidewall of the installation hole 120 maintains sufficient structural strength and reducing the risk of cracking or deformation of the bracket 100 structure.

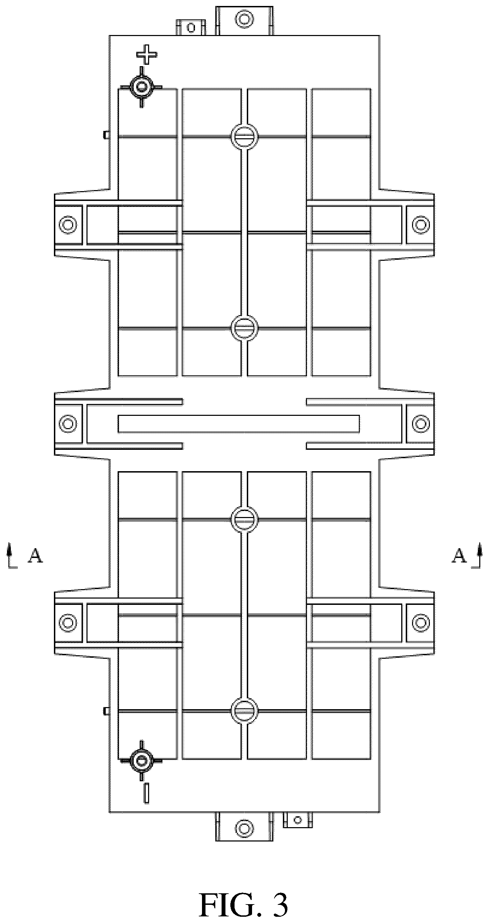

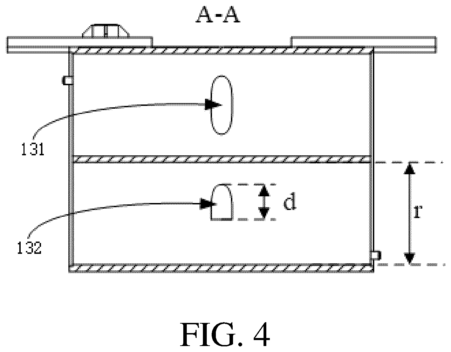

In some embodiments, with reference to FIG. 1, FIG. 3, and FIG. 4, FIG. 3 is a top view of the bracket in FIG. 1, and FIG. 4 is a cross-sectional view along line A-A in FIG. 3. The size d of the second communication hole 132 in the second direction and the radius r of the installation hole 120 satisfy: r - 0.2 mm ≤ d ≤ r + 0.2 mm.

Through experimental verification, when the size d of the second communication hole 132 in the second direction is greater than r + 0.2 mm, the inner sidewall where the second communication hole 132 is located may have insufficient structural strength due to d being too large. In the present case, the load-bearing capacity and stability of the base part 110 would be affected, especially under external pressure or load, risking cracking or deformation of the inner sidewall of the corresponding installation hole 120, thereby reducing the service life and reliability of the bracket 100. Additionally, the size d of the second communication hole 132 in the second direction being less than r - 0.2 mm may lead to lower flow efficiency of the glue material, affecting the efficiency of bonding the battery cell 200 to the inner sidewall of the installation hole 120 with the glue material.

Therefore, the present embodiment sets the size d of the second communication hole 132 in the second direction between r - 0.2 mm and r + 0.2 mm, effectively ensuring the structural strength of the inner sidewall of the bracket 100 while also ensuring high injection efficiency.

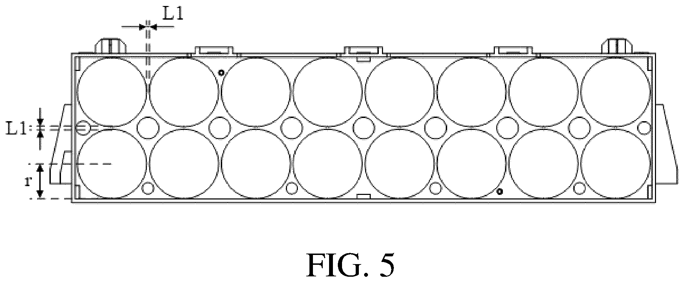

In some embodiments, with reference to FIG. 5, FIG. 5 is a side view of the bracket in FIG. 1. The base part 110 is provided with a plurality of installation holes 120, and the plurality of the installation holes 120 are evenly spaced in both the first direction and the second direction, and a wall thickness L1 of a wall between adjacent two of the installation holes 120 ranges from 2 mm to 2.5 mm.

Through experimental verification, to ensure the structural strength of the base part 110, the wall thickness between adjacent installation holes 120 must not be less than 2 mm. The wall thickness between adjacent installation holes 120 being less than 2 mm may lead to insufficient structural strength of the base part 110, especially when the bracket 100 is subjected to external pressure or vibration to easily result in cracking or deformation of the wall of the installation hole 120, thus affecting the load-bearing capacity and service life of the bracket 100. Therefore, a minimum wall thickness of 2 mm effectively ensures the stability and compressive strength of the base part 110 of the bracket 100, preventing failure or damage to the battery cell 200 due to structural instability of the base part 110. Additionally, to avoid the base part 110 being too heavy, which would increase the overall weight of the bracket 100, the wall thickness between adjacent installation holes 120 must not exceed 2.5 mm. Excessive wall thickness increases material usage, raising production costs, and may make the bracket 100 heavier, affecting the operational convenience.

When the wall thickness between adjacent installation holes 120 is between 2 mm and 2.5 mm, the base part 110 exhibits good structural strength under normal working conditions, and the wall thickness range effectively avoids inconvenience due to excessive weight of the bracket 100 caused by overly thick walls.

In some embodiments, the base part 110 is provided with a plurality of installation holes 120, and the plurality of the installation holes 120 are arranged in the first direction and the second direction. Additionally, the base part 110 is also provided with a plurality of lightening holes 150, each lightening hole 150 being located between the plurality of the installation holes 120 that are adjacent in the first direction and the second direction.

In the present embodiment, the lightening holes 150 provided in the base part 110 offer the following significant advantages:
(1) Reducing the weight of the base part 110: The design of the lightening holes 150 effectively reduces the weight of the base part 110. Adding lightening holes 150 at positions between the installation holes 120 reduces unnecessary material usage and lowers the overall weight without affecting the load-bearing capacity of the base part 110, thereby reducing the production and transportation costs of the bracket 100.
(2) Enhancing the structural strength of the base part 110: The placement of the lightening holes 150 effectively controls the wall thickness of the inner walls of the base part 110. By designing the size and position of the lightening holes 150, the wall thickness between the inner wall of the lightening hole 150 and the inner wall of the adjacent installation hole 120 can be controlled to be approximately equal to the wall thickness between adjacent two of the installation holes 120 to ensure consistent wall thickness across various parts of the base part 110, avoiding strength imbalances due to local wall thickness being too thin or too thick, thereby ensuring wall thickness consistency, enabling the base part 110 to effectively disperse external loads, reduce stress concentration, and enhance the overall stability and load-bearing capacity of the base part 110.

In some embodiments, a diameter of the glue injection hole 140 ranges from 8 mm to 10 mm. The diameter of the glue injection hole 140 significantly impacts glue injection efficiency. Through experimental verification, when the diameter of the glue injection hole 140 is less than 8 mm, the flow of glue material is restricted during the glue injection process, resulting in a smaller amount of glue material injected per unit time, leading to low glue injection efficiency, which ultimately affects the installation efficiency of the battery cell 200. When the diameter of the glue injection hole 140 exceeds 10 mm, excessive glue injection may lead to the production of redundant glue material during the process.

Therefore, the present embodiment designs the diameter of the glue injection hole 140 within the range of 8 mm to 10 mm, effectively balancing glue injection efficiency and the amount of redundant glue material. Within the range, excessive redundant glue material during the glue injection process is prevented while glue injection efficiency is ensured.

In some embodiments, with reference to FIG. 1 and FIG. 2, the bracket 100 further includes a plurality of mounting parts 160, each mounting part 160 is connected to the base part 110, and the mounting part 160 is configured to fix the base part 110 to other elements. Each mounting part 160 is provided with a screw hole, and the through hole is configured for fasteners such as bolts to pass through, cooperating with the screw holes of a box body to achieve the fixation of the base part 110. The spacing between adjacent two of the mounting parts 160 is equal, and the design effectively disperses the stress borne when fixing the base part 110, avoiding stress concentration at a specific position, thereby reducing the risk of damage to the bracket 100. The uniform spacing design ensures the stability of the bracket 100 under different load conditions, preventing the base part structure from cracking due to excessive local stress, thus improving the overall durability and service life of the bracket 100.

Additionally, a gap is provided between some mounting parts 160 and the base part 110, designed to allow a partition assembly (not shown in the figures) to be clamped between the mounting part 160 and the base part 110, thereby enabling the partition assembly to fix and protect the battery cell 200. By being clamped between the mounting part 160 and the base part 110, the partition assembly prevents the battery cell 200 from displacing in the third direction, ensuring the safety of the battery cell 200.

The present application provides a bracket 100, the bracket 100 comprises a base part 110, the base part 110 is provided with at least one installation hole 120 and at least one communication hole 130, each installation hole 120 is adapted for installing a corresponding battery cell 200, each communication hole 130 is defined through an inner sidewall of a corresponding one of the at least one installation hole 120, the base part 110 is further provided with at least one glue injection hole 140, each glue injection hole 140 communicates with the corresponding installation hole 120 through a corresponding of the at least one communication hole 130. On one hand, the bracket 100 provided by the present application can avoid the operation of positioning and aligning the bracket 100 during the installation process of the battery cell 200 in related technologies, thereby reducing the complexity of manual operations during the installation process of the battery cell 200. On the other hand, injecting glue material into the gap between the battery cell 200 and the installation hole 120 through the glue injection hole 140 can effectively enhance the connection stability between the battery cell 200 and the installation hole 120, effectively reducing the impact of external impact forces and vibrations on the connection stability between the bracket 100 and the battery cell 200, thereby reducing the risk of displacement of the battery cell 200 or loosening of the connection with other assemblies.

The present application also provides a battery pack, the battery pack comprises the above-mentioned bracket 100 and possesses all the advantages of the above-mentioned bracket 100, which will not be repeated here.

## Claims

1. A bracket (100), **characterized in that** the bracket (100) is configured for installing at least one battery cell (200) and comprises:
a base part (110) provided with at least one installation hole (120) and at least one communication hole (130), wherein each installation hole (120) is adapted for installing a corresponding one of the at least one battery cell (200), and each communication hole (130) is defined through an inner sidewall of a corresponding one of the at least one installation hole (120);
wherein the base part (110) is further provided with at least one glue injection hole (140), and each glue injection hole (140) communicates with the installation hole (120) through a corresponding one of the at least one communication hole (130).

2. The bracket (100) according to claim 1, wherein the battery cell (200) is bonded in the installation hole (120).

3. The bracket (100) according to claim 1 or 2, wherein the base part (110) is provided with a plurality of the installation holes (120), the plurality of the installation holes (120) are arranged in a first direction; each communication hole (130) is defined through the inner sidewalls of adjacent two of the installation holes (120) in the first direction; and wherein each glue injection hole (140) communicates with adjacent two of the installation holes (120) in the first direction through a corresponding one of the at least one communication hole (130).

4. The bracket (100) according to any one of claims 1 to 3, wherein the base part (110) is provided with a plurality of the installation holes (120), the plurality of the installation holes (120) are arranged in a second direction; and wherein each glue injection hole (140) communicates with adjacent two of the installation holes (120) in the second direction through corresponding two of the at least one communication hole (130).

5. The bracket (100) according to claim 4, wherein the two communication holes comprise a first communication hole (131) and a second communication hole (132), the second communication hole (132) is located on a side of the first communication hole (131) away from the glue injection hole (140); wherein a size of the second communication hole (132) in a circumferential direction of a corresponding one of the installation holes (120) is less than a size of the first communication hole (131) in the circumferential direction of a corresponding one of the installation holes (120).

6. The bracket (100) according to claim 5, wherein r - 0.2 mm ≤ d ≤ r + 0.2 mm; wherein d is a size of the second communication hole (132) in the second direction, and r is a radius of the installation hole (120).

7. The bracket (100) according to any one of claims 1 to 6, wherein the base part (110) is provided with a plurality of the installation holes (120), the plurality of the installation holes (120) are arranged in a first direction and a second direction; wherein a wall thickness of a wall between adjacent two of the installation holes (120) ranges from 2mm to 2.5mm.

8. The bracket (100) according to any one of claims 1 to 6, wherein the base part (110) is provided with a plurality of the installation holes (120), the plurality of the installation holes (120) are arranged in a first direction and a second direction; wherein the base part (110) is further provided with a plurality of lightening holes (150), and each lightening hole (150) is located between adjacent ones of the installation holes (120) in the first direction and the second direction.

9. The bracket (100) according to claim 8, wherein a wall thickness of a wall between each lightening hole (150) and a corresponding one of the installation holes (120) is equal to a wall thickness of a wall between adjacent ones of the installation holes (120).

10. The bracket (100) according to any one of claims 1 to 9, wherein a diameter of the glue injection hole (140) ranges from 8 mm to 10 mm.

11. A battery pack, **characterized in that** the battery pack comprises the bracket (100) according to any one of claims 1 to 10.

12. The battery pack according to claim 11, further comprising a box body and at least one battery cell (200); and
wherein the battery cell (200) is installed on the bracket (100), and the bracket (100) is fixed on the box body.

13. The battery pack according to claim 12, wherein the bracket (100) further comprises at least one mounting part (160), and the bracket (100) is fixed on the box body through the mounting part (160).

14. The battery pack according to claim 13, wherein each mounting part (160) is connected to the base part (110), and a gap is provided between each of some of the at least one mounting part (160) and the base part (110); and
the battery pack comprises a partition assembly, and the partition assembly is clamped between the mounting part (160) and the base part (110).
